# EUROPEAN PATENT SPECIFICATION

(11) **EP 4 166 349 B1**
(45) Date of publication and mention of the grant of the patent: **23.04.2025**
(21) Application number: 21825749.1
(22) Date of filing: 11.05.2021
(51) Int. Cl.: B60C 1/00, C08K 5/548, C08L 9/00, C08K 3/04, C08K 3/36, B60C 11/00, C08F 236/10, C08L 7/00, C08L 15/00, C08C 19/22, C08C 19/25, C08C 19/44, C08K 3/22, B60C 11/03, C08F 236/06, B60C 19/00, B60C 19/12

(54) **TIRE**
REIFEN
PNEU

(30) Priority: 15.06.2020 JP 2020103284
(43) Date of publication of application: 19.04.2023
(73) Proprietor: Sumitomo Rubber Industries, Ltd., Kobe-shi, Hyogo 651-0072 (JP)
(72) Inventor: KUNISAWA, Tetsuya, Kobe-shi, Hyogo 651-0072 (JP)
(74) Representative: TBK
(86) International application number: PCT/JP2021/017909
(87) International publication number: WO 2021/256124

(56) References cited:
- WO-A1-2011/087004
- WO-A1-2017/064939
- JP-A- 2011 140 612
- JP-A- 2012 188 040
- JP-A- 2013 184 330
- JP-A- 2013 234 252
- JP-A- H 068 708
- JP-A- H04 218 405
- JP-A- H07 242 103
- JP-A- H1 044 714
- JP-A- H11 278 015

## Description

### TECHNICAL FIELD

The invention relates to a tire.

### BACKGROUND ART

Important performances required for a tire include wet grip performance and abrasion resistance. Moreover, in recent years, from the viewpoint of resource saving, an improvement in fuel efficiency as a result of an improvement in rolling resistance of the tire is called for. The improvement in fuel efficiency requires a low hysteresis loss, while an improvement in wet grip performance requires a high wet skid resistance. However, the low hysteresis loss and the high wet skid resistance are mutually contradictory, and it is difficult to improve fuel efficiency and wet grip performance in a well-balanced manner. While reducing the weight of a filler such as silica, carbon black, and the like causes rolling resistance to decrease, reinforcing property, abrasion resistance, and wet grip performance tend to decrease.

Patent document 1 discloses a rubber composition for tires, in which rubber composition fuel efficiency, wet grip performance, and abrasion resistance are improved by compounding a specific liquid resin and silica.

### PRIOR ART DOCUMENT

### Patent Document

Patent Document 1: JP 2013-053296 A

### SUMMARY OF THE INVENTION

### PROBLEM TO BE SOLVED BY THE INVENTION

To improve the balance of fuel efficiency, wet grip performance, and abrasion resistance, a tire provided with three layers being a surface layer, an intermediate layer, and a base layer in a tread rubber and formed with a circumferential groove deeper than an outer surface of the intermediate layer is being proposed. However, with such a tire, as the surface layer and the intermediate layer are composed of different types of rubber layers, strain concentrates around the interface, so that adhesiveness at the interface tends to decrease. In addition, in a case that the groove depth at the intermediate layer with respect to the depth of the circumferential groove increases beyond a predetermined proportion, durability could synergistically decrease.

An object of the invention is to provide a tire having an improved overall performance of fuel efficiency, wet grip performance, abrasion resistance, and durability.

### MEANS TO SOLVE THE PROBLEM

As a result of intensive studies, the inventor has found that the previously-described problem could be solved by providing a tread part with three or more predetermined rubber layers, making the rubber layers in a specific compounding ratio, and setting the groove depth in an intermediate layer with respect to the depth of a circumferential groove to be a predetermined proportion, and completed the invention.

In other words, the invention relates to
[1] A tire having a tread, wherein the tread at least comprises a first layer constituting a tread surface, a second layer being arranged adjacent on the inner side of the first layer in the radial direction, and a third layer being present on the inner side of the second layer in the radial direction, wherein the first layer, the second layer, and the third layer are composed of a rubber composition comprising a rubber component, wherein the rubber compositions constituting the first layer and the second layer comprise silica and a mercapto-based silane coupling agent, wherein a silica content of the rubber compositions constituting the first layer and the second layer is greater than a carbon black content respectively, based on 100 parts by mass of the rubber component, wherein the tread has a land part being partitioned by a circumferential groove in a plurality, wherein a deepest part of the groove bottom of the circumferential groove is formed so as to be located on the inner side of an outer surface of the second layer in the tire radial direction, and wherein, when the distance between an extension line of the land part and an extension line of the deepest part of the groove bottom of the circumferential groove is defined as H1 and the distance between an extension line of the outer surface of the second layer and the extension line of the deepest part of the groove bottom of the circumferential groove is defined as H2, H2/H1 is 0.20 or more.
[2] The tire of [1] above, wherein the difference between a softener content of the rubber composition constituting the first layer based on 100 parts by mass of the rubber component and a softener content of the rubber composition constituting the second layer based on 100 parts by mass of the rubber component is 50 parts by mass or less.
[3] The tire of [1] or [2] above, wherein the difference between a sulfur content of the rubber composition constituting the first layer based on 100 parts by mass of the rubber component and a sulfur content of the rubber composition constituting the second layer based on 100 parts by mass of the rubber component is 1.0 parts by mass or less.
[4] The tire of any one of [1] to [3] above, wherein the difference between a vulcanization accelerator content of the rubber composition constituting the first layer based on 100 parts by mass of the rubber component and a vulcanization accelerator content of the rubber composition constituting the second layer based on 100 parts by mass of the rubber component is 3.5 parts by mass or less.
[5] The tire of any one of [1] to [4] above, wherein the H2/H1 is 0.30 or more.
[6] The tire of any one of [1] to [5] above, wherein at least one of the rubber compositions constituting the first layer and the second layer comprises 100 parts by mass or more of silica based on 100 parts by mass of the rubber component.
[7] The tire of any one of [1] to [6] above, wherein each of the rubber compositions constituting the first layer and the second layer comprise 50 to 130 parts by mass of silica based on 100 parts by mass of the rubber component, and a proportion of silica with respect to a total content of silica and carbon black is 60% by mass or more.
[8] The tire of any one of [1] to [7] above, wherein each of the rubber compositions constituting the first layer and the second layer comprise 10 parts by mass or more of a softener based on 100 parts by mass of the rubber component.
[9] The tire of any one of [1] to [8] in the above, wherein each of the rubber components constituting the first layer and the second layer comprise 40% by mass or more of a styrene-butadiene rubber.
[10] The tire of any one of [1] to [9] above, wherein a content of a diene-based rubber modified with a functional group having affinity with silica in 100% by mass of the rubber component constituting the first layer and the second layer is 40% by mass or more.
[11] The tire of any one of [1] to [10] above, wherein the rubber composition constituting the first layer comprises 1.0 parts by mass or more of aluminum hydroxide based on 100 parts by mass of the rubber component.
[12] The tire of any one of [1] to [11] above, wherein the thickness of each of the first layer, the second layer, and the third layer is 1.0 mm or more.
[13] The tire of any one of [1] to [12] above, wherein a ratio (t2/t1) of a thickness t2 of the second layer with respect to a thickness t1 of the first layer is 0.4 to 5.0.
[14] The tire of any one of [1] to [13] above, wherein a ratio (t3/t2) of a thickness t3 of the third layer with respect to a thickness t2 of the second layer is 0.2 to 3.0.
[15] The tire of any one of [1] to [14] above, wherein a tire inner cavity is provided with at least one selected from the group consisting of a sealant, a noise-damping body, and an electronic component for tire monitoring.
[16] The tire of any one of [1] to [15] above, wherein the tire is a tire for a passenger car.

### EFFECTS OF THE INVENTION

According to the invention, a tread part is provided with three or more predetermined rubber layers, the rubber layers are made in a specific compounding ratio, and the groove depth at an intermediate layer with respect to the depth of a circumferential groove is set to be a predetermined proportion, allowing a tire having an improved overall performance of fuel efficiency, wet grip performance, abrasion resistance, and durability to be provided.

### BRIEF DESCRIPTION OF THE DRAWINGS

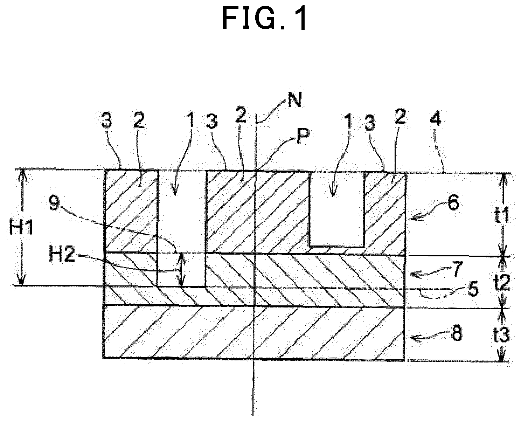

FIG. 1 is an enlarged cross-sectional view showing a part of a tread of a tire according to one embodiment of the disclosure.

### EMBODIMENT FOR CARRYING OUT THE INVENTION

A tire according to one embodiment of the disclosure is a tire having a tread, wherein the tread at least comprises a first layer constituting a tread surface, a second layer being arranged adjacent on the inner side of the first layer in the radial direction, and a third layer being present on the inner side of the second layer in the radial direction, wherein the first layer, the second layer, and the third layer are composed of a rubber composition comprising a rubber component, wherein the rubber compositions constituting the first layer and the second layer comprise silica and a mercapto-based silane coupling agent, wherein a silica content of the rubber compositions constituting the first layer and the second layer is greater than a carbon black content respectively, based on 100 parts by mass of the rubber component, wherein the tread has a land part being partitioned by a circumferential groove in a plurality, wherein a deepest part of the groove bottom of the circumferential groove is formed so as to be located on the inner side of an outer surface of the second layer in the tire radial direction, and wherein, when the distance between an extension line of the land part and an extension line of the deepest part of the groove bottom of the circumferential groove is defined as H1 and the distance between an extension line of the outer surface of the second layer and the extension line of the deepest part of the groove bottom of the circumferential groove is defined as H2, H2/H1 is 0.20 or more (preferably 0.30 or more).

Although it is not intended to be bound by theory, in the disclosure, a mechanism in which durability of a tire improves can be considered as follows. In other words, a highly-active coupling agent such as a mercapto-based silane coupling agent can be compounded to more firmly link a polymer in the first layer and silica in the second layer, or silica in the first layer and a polymer in the second layer, making it possible to strengthen adherence at the interface of rubber layers. It is considered that this makes it possible to increase durability even in a case that a proportion of the groove depth of the second layer with respect to the depth of the circumferential groove increases.

The difference between a softener content of the rubber composition constituting the first layer based on 100 parts by mass of the rubber component and a softener content of the rubber composition constituting the second layer based on 100 parts by mass of the rubber component is preferably 50 parts by mass or less, more preferably 40 parts by mass or less, further preferably 30 parts by mass or less, and particularly preferably 20 parts by mass or less. Setting the difference in softener content between the first layer and the second layer to be within the previously-described range makes it possible to suppress a decrease in durability caused by the concentration of strain around the interface due to an increase in the difference in hardness between the first layer and the second layer. Besides, while the content of the softener of the first layer may be greater or less than the content of the softener of the second layer as long as the difference is within the previously-described range, the content of the softener of the first layer is preferably greater than the content of the softener of the second layer, from the viewpoint of suppressing a decrease in wet grip performance after the first layer is worn.

The difference between a sulfur content of the rubber composition constituting the first layer based on 100 parts by mass of the rubber component and a sulfur content of the rubber composition constituting the second layer based on 100 parts by mass of the rubber component is preferably 1.0 parts by mass or less, more preferably 0.8 parts by mass or less, further preferably 0.6 parts by mass or less, further preferably 0.4 parts by mass or less, and particularly preferably 0.3 parts by mass or less. Setting the difference in sulfur content between the first layer and the second layer to be within the previously-described range makes it possible to suppress a decrease in durability caused by decreasing the strength around the interface due to sulfur transfer from a rubber layer having more sulfur to a rubber layer having less sulfur at the time of vulcanization. Besides, while the sulfur content of the first layer may be greater or less than the sulfur content of the second layer as long as the difference is within the previously-described range, the sulfur content of the first layer is preferably less than the sulfur content of the second layer from the viewpoint of fuel efficiency.

The difference between a vulcanization accelerator content of the rubber composition constituting the first layer based on 100 parts by mass of the rubber component and a vulcanization accelerator content of the rubber composition constituting the second layer based on 100 parts by mass of the rubber component is preferably 3.5 parts by mass or less, more preferably 3.0 parts by mass or less, further preferably 2.5 parts by mass or less, and particularly preferably 2.0 parts by mass or less. Setting the difference in vulcanization accelerator content between the first layer and the second layer to be within the previously-described range makes it possible to suppress a decrease in durability caused by decreasing the strength around the interface due to vulcanization accelerator transfer from a rubber layer having more sulfur to a rubber layer having less sulfur at the time of vulcanization. Besides, while the vulcanization accelerator content of the first layer may be greater or less than the vulcanization accelerator content of the second layer as long as the difference is within the previously-described range, the vulcanization accelerator content of the first layer is preferably greater than the vulcanization accelerator content of the second layer. As described above, in a case that the softener content of the first layer is greater than the softener content of the second layer, the vulcanization rate of the rubber composition constituting the first layer tends to be slow. Moreover, also in a case that the silica content of the rubber composition constituting the first layer is increased to improve wet grip performance, the vulcanization rate of the rubber composition constituting the first layer tends to be slow. For these reasons, the vulcanization accelerator content of the first layer is preferably made to be greater than the vulcanization accelerator content of the second layer to secure the vulcanization rate of the rubber composition constituting the first layer.

At least one of the rubber compositions constituting the first layer and the second layer preferably comprises 100 parts by mass or more of silica based on 100 parts by mass of the rubber component.

Preferably, each of the rubber compositions constituting the first layer and the second layer comprise 50 to 130 parts by mass of silica based on 100 parts by mass of the rubber component and a proportion of silica with respect to a total content of silica and carbon black is 60% by mass or more.

Each of the rubber compositions constituting the first layer and the second layer preferably comprise 10 parts by mass or more of a softener based on 100 parts by mass of the rubber component.

Each of the rubber components constituting the first layer and the second layer preferably comprise 40% by mass or more of a styrene-butadiene rubber.

The rubber compositions constituting the first layer and the second layer preferably comprise a diene-based rubber modified with a functional group having affinity with silica as a rubber component. A content thereof is preferably 40% by mass or more, more preferably 50% by mass or more, further preferably 60% by mass or more, and particularly preferably 70% by mass or more.

A rubber composition constituting the first layer preferably comprises aluminum hydroxide. A content thereof is preferably 1.0 parts by mass or more, more preferably 3.0 parts by mass or more, and further preferably 5.0 parts by mass or more based on 100 parts by mass of the rubber component.

The thickness of each of the first layer, the second layer, and the third layer is preferably 1.0 mm or more.

A ratio (t2/t1) of a thickness t2 of the second layer with respect to a thickness t1 of the first layer is preferably 0.4 to 5.0.

A ratio (t3/t2) of a thickness t3 of the third layer with respect to a thickness t2 of the second layer is preferably 0.2 to 3.0.

With the tire of the disclosure, a tire inner cavity is preferably provided with at least one selected from the group consisting of a sealant, a noise-damping body, and an electronic component for tire monitoring.

The tire of the disclosure is suitably used as a tire for a passenger car.

A procedure of producing the tire being one embodiment of the disclosure will be described in detail below. In specification, a numerical range shown using the recitation "to" is to include the numerical values at both ends thereof.

FIG. 1 is an enlarged cross-sectional view showing a part of a tread of a tire according to the disclosure. In FIG. 1, the up-down direction is the tire radial direction, the left-right direction is the tire axial direction, and the direction being perpendicular to the paper surface is the tire circumferential direction.

As shown, a tread part of the tire of the disclosure comprises a first layer 6, a second layer 7, and a third layer 8, an outer surface of the first layer 6 constitutes a tread surface 3, the second layer 7 is arranged adjacent on the inner side of the first layer 6 in the radial direction, and the third layer 8 is present on the inner side of the second layer 7 in the radial direction. The third layer 8 is preferably arranged adjacent on the inner side of the second layer 7 in the radial direction. Moreover, as long as the object of the invention is achieved, it can be further provided with one or a plurality of rubber layers between the second layer 7 and the third layer 8 and/or the third layer 8 and a belt layer.

In FIG. 1, a two-way arrow t1 is the thickness of the first layer 6, a two-way arrow t2 is the thickness of the second layer 7, and a two-way arrow t3 is the thickness of the third layer 8. In FIG. 1, an arbitrary point on a tread surface, at which arbitrary point no grooves are formed, is shown as a symbol P. A straight line shown with a symbol N is a straight line passing through a point P and being perpendicular (normal) with respect to a contact plane of this point P. In the specification, thicknesses t1, t2, and t3 are measured along a normal line N being drawn from the point P on the tread surface, at which point P no grooves are present, in a cross section of FIG. 1.

While the thickness t1 of the first layer 6 is not particularly limited in the disclosure, from the viewpoint of wet grip performance, it is preferably 1.0 mm or more, more preferably 1.5 mm or more, and further preferably 2.0 mm or more. On the other hand, from the viewpoint of heat generation, the thickness t1 of the first layer 6 is preferably 10.0 mm or less, more preferably 9.0 mm or less, and further preferably 8.0 mm or less.

While the thickness t2 of the second layer 7 is not particularly limited in the disclosure, it is preferably 1.5 mm or more, more preferably 2.0 mm or more, and further preferably 2.5 mm or more. Moreover, the thickness t2 of the second layer 7 is preferably 10.0 mm or less, more preferably 9.0 mm or less, and further preferably 8.0 mm or less.

While the thickness t3 of the third layer 8 is not particularly limited in the disclosure, it is preferably 1.0 mm or more and more preferably 1.5 mm or more. Moreover, the thickness t3 of the third layer 8 is preferably 10.0 mm or less, more preferably 9.0 mm or less, and further preferably 8.0 mm or less.

From the viewpoint of fuel efficiency, a ratio (t2/t1) of the thickness t2 of the second layer 7 with respect to the thickness t1 of the first layer 6 is preferably 0.4 or more, more preferably 0.5 or more, further preferably 0.7 or more, and particularly preferably 0.9 or more. On the other hand, from the viewpoint of wet grip performance, it is preferably 5.0 or less, more preferably 4.5 or less, further preferably 4.0 or less, and particularly preferably 3.5 or less.

From the viewpoint of better exhibiting the effect of the disclosure, a ratio (t3/t2) of the thickness t3 of the third layer 8 with respect to the thickness t2 of the second layer 7 is preferably 0.2 or more, more preferably 0.3 or more, and further preferably 0.4 or more. On the other hand, from the viewpoint of better exhibiting the effect of the disclosure, the ratio (t3/t2) of the thickness t3 of the third layer 8 with respect to the thickness t2 of the second layer 7 is preferably 3.0 or less, more preferably 2.0 or less, further preferably 1.5 or less, and particularly preferably 0.9 or less.

The thickness t2 of the second layer 7 with respect to the thickness of the entire tread part is preferably 20 to 90%, more preferably 25 to 80%, and further preferably 30 to 75%. Besides, the thickness of the entire tread part in the disclosure means the total thickness of the rubber layers constituting the tread part and is determined by the shortest distance from the tread surface 3 to the belt layer.

The tread of the disclosure has a circumferential groove 1 in a plurality, which circumferential groove 1 extends continuously in the tire circumferential direction. The circumferential groove 1 may extend linearly along the circumferential direction or may extend in a zigzag manner along the circumferential direction.

The tread of the disclosure has a land part 2 being partitioned by the circumferential groove 1 in the tire width direction.

A groove depth H1 of the circumferential groove 1 is determined by the distance between an extension line 4 of the land part 2 and an extension line 5 of a deepest part of the groove bottom of the circumferential groove 1. Besides, in a case that the circumferential groove 1 is in a plurality, for example, the groove depth H1 can be set to be the distance between the extension line 4 of the land part 2 and the extension line 5 of the deepest part of the groove bottom of the circumferential groove 1 having the greatest groove depth (the circumferential groove 1 on the left in FIG. 1) of the plurality of circumferential grooves 1.

The tire of the disclosure is formed such that the deepest part of the groove bottom of the circumferential groove 1 is located on the inner side of the outer surface of the second layer 7 in the tire radial direction. When the distance between the extension line 4 of the land part 2 and the extension line 5 of the deepest part of the groove bottom of the circumferential groove 1 is defined as H1 and the distance between an extension line 9 of the outer surface of the second layer 7 and the extension line 5 of the deepest part of the groove bottom of the circumferential groove 1 is defined as H2, H2/H1 is 0.20 or more, preferably 0.25 or more, more preferably 0.30 or more, further preferably 0.35 or more, and particularly preferably 0.40 or more. H2/H1 being set to be within the previously-described range makes it possible to improve fuel efficiency and wet grip performance in a well-balanced manner. Moreover, the deepest part of the groove bottom and the outer surface of the second layer 7 being separate makes it possible to secure durability of the groove bottom.

With the tire of the disclosure, the tire inner cavity may be provided with a sealant, a noise-damping body, an electronic component for tire monitoring, and the like.

As sealants, those generally used for a tire inner circumferential surface of the tread part for puncture prevention may be suitably used. Specific examples of a sealant layer as such include what is disclosed in JP 2020-023152 A, for example. Normally, the thickness of the sealant is preferably 1 to 10 mm. Normally, the width of the sealant is preferably 85 to 115% and is preferably 95 to 105% of the maximum width of the belt layer.

Any one of noise damping bodies may be suitably used as long as it can exhibit a noise-damping effect in the tire inner cavity. Specific examples of a noise-damping body as such include what is disclosed in JP 2019-142503 A, for example. The noise-damping body is composed of a porous sponge material, for example. The sponge material is a cavernous porous structural body, and includes a web-shaped body, which web-shaped body is an animal fiber, a vegetable fiber, or a synthetic fiber and the like being intertwined and integrally coupled, in addition to a so-called sponge itself having interconnected cells in which a rubber or a synthetic resin is foamed, for example. Moreover, the "porous structural body" includes a body having, not only interconnected cells, but also closed cells. Examples of the noise-damping body include a sponge material having interconnected cells made of polyurethane. As the sponge material, for example, synthetic resin sponges such as an ether-based polyurethane sponge, an ester-based polyurethane sponge, a polyethylene sponge, and rubber sponges such as a chloroprene rubber sponge (CR sponge), an ethylene-propylene rubber sponge (EDPM sponge), a nitrile rubber sponge (NBR sponge), and the like can be suitably used, and, in particular, a polyurethane-based sponge including an ether-based polyurethane sponge, or polyethylene-based sponge is preferable from the viewpoints of noise damping property, lightweight property, controllability of foaming, durability, and the like.

The noise-damping body has an elongated belt-like shape having a bottom surface fixed to the inner cavity surface of the tread part and extends in the tire circumferential direction. At this time, outer ends thereof in the circumferential direction may be made to be in contact with each other to form a substantially annular shape, or the outer ends thereof may be spaced apart in the circumferential direction.

In the disclosure, unless otherwise specified, dimensions and angles of each member of the tire are measured with the tire being incorporated into the normal rim and filled with air so as to achieve the normal internal pressure. At the time of measurement, no load is applied to the tire. Besides, in the specification, the "normal rim" is a rim defined, in a standard system including a standard on which the tire is based, for each tire by the standard, and is, for example, a standard rim for JATMA, a "Design Rim" for TRA, and a "Measuring Rim" for ETRTO. In the specification, the "normal internal pressure" is an air pressure defined for each tire by the standard, and is a maximum air pressure for JATMA, a maximum value described in the table "TIRE LOAD LIMITS AT VARIOUS COLD INFLATION PRESSURES" for TRA, or "INFLATION PRESSURE" for ETRTO.

### [Rubber composition for tread]

As described above, a rubber composition constituting each rubber layer of the tread (rubber composition for the tread) comprises a rubber component and a plasticizer.

### <Rubber component>

The rubber composition constituting each rubber layer of the tread (rubber composition for the tread) according to the disclosure preferably comprises at least one selected from the group consisting of an isoprene-based rubber, a styrene-butadiene rubber (SBR), and a butadiene rubber (BR) as rubber components. The rubber components constituting the first layer 6 and the second layer 7 preferably comprise a SBR, more preferably comprise a SBR and a BR, or may be rubber components only consisting of a SBR and a BR. The rubber component constituting the third layer 8 preferably comprises an isoprene-based rubber, more preferably comprises an isoprene-based rubber and a BR, or may be a rubber component only consisting of an isoprene-based rubber and a BR.

### (Isoprene-based rubbers)

As the isoprene-based rubbers, those common in the tire industry such as an isoprene rubber (IR), a natural rubber, and the like, for example, can be used. In the natural rubber, in addition to a non-modified natural rubber (NR), an epoxidized natural rubber (ENR), a hydrogenated natural rubber (HNR), a deproteinized natural rubber (DPNR), an ultra pure natural rubber, a modified natural rubber including a grafted natural rubber, etc., and the like are also included. These isoprene-based rubbers may be used alone or two or more thereof may be used in combination.

NRs are not particularly limited, and those commonly used in the tire industry can be used, such as SIR20, RSS#3, TSR20, and the like, for example.

A content of the isoprene-based rubber (preferably the natural rubber and more preferably the non-modified natural rubber (NR)) in 100% by mass of the rubber component when the rubber compositions constituting the first layer 6 and the second layer 7 comprise the isoprene-based rubber is, from the viewpoint of wet grip performance, preferably 50% by mass or less, more preferably 40% by mass or less, further preferably 30% by mass or less, and particularly preferably 20% by mass or less. Moreover, while a lower limit of a content of the isoprene-based rubber when the rubber composition comprises the isoprene-based rubber is not particularly limited, it may be 1% by mass or more, 3% by mass or more, 5% by mass or more, 10% by mass or more, or 15% by mass or more, for example. A content of the isoprene-based rubber in 100% by mass of the rubber component when the rubber composition constituting the third layer 8 comprises the isoprene-based rubber is not particularly limited, and it may be 10% by mass or more, 30% by mass or more, 40% by mass or more, 50% by mass or more, or 60% by mass or more, for example.

### (SBR)

The SBR is not particularly limited, and examples thereof include a solution-polymerized SBR (S-SBR), an emulsion-polymerized SBR (E-SBR), modified SBRs thereof (a modified S-SBR, a modified E-SBR), and the like. Examples of the modified SBR include a SBR modified at its terminal and/or main chain, a modified SBR coupled with tin, a silicon compound, etc. (a modified SBR of condensate or having a branched structure, etc.), and the like. Among them, an S-SBR and a modified SBR are preferable. Furthermore, hydrogenated additives of these SBRs (hydrogenated SBRs) and the like may also be used. These SBRs may be used alone or two or more thereof may be used in combination.

As the SBR, an oil-extended SBR can be used, or a non-oil-extended SBR can be used. When the oil-extended SBR is used, an oil-extended amount of SBR, that is, a content of an oil-extended oil comprised in the SBR, is preferably 10 to 50 parts by mass based on 100 parts by mass of a rubber solid content of the SBR.

The S-SBRs that can be used in the disclosure include those commercially available from JSR Corporation, Sumitomo Chemical Co., Ltd., Ube Industries, Ltd., Asahi Kasei Corporation, ZS Elastomer Co., Ltd., etc.

A styrene content of the SBR is preferably 10% by mass or more, more preferably 15% by mass or more, and further preferably 20% by mass or more, from the viewpoints of wet grip performance and abrasion resistance. Moreover, it is preferably 60% by mass or less, more preferably 55% by mass or less, and further preferably 50% by mass or less, from the viewpoints of temperature dependence of grip performance and blow resistance. Besides, in the specification, the styrene content of the SBR is calculated by ¹H-NMR measurement.

A vinyl content of the SBR is preferably 10 mol% or more, more preferably 15 mol% or more, and further preferably 20 mol% or more, from the viewpoints of ensuring reactivity with silica, wet grip performance, rubber strength, and abrasion resistance. Moreover, the vinyl content of the SBR is preferably 70 mol% or less, more preferably 65 mol% or less, and further preferably 60 mol% or less, from the viewpoints of preventing temperature dependence from increasing, elongation at break, and abrasion resistance. Besides, in the specification, the vinyl content (1,2-bond butadiene unit amount) of the SBR is measured by infrared absorption spectrometry.

A weight-average molecular weight (Mw) of the SBR is preferably 200,000 or more, more preferably 250,000 or more, and further preferably 300,000 or more, from the viewpoint of wet grip performance. Moreover, the weight-average molecular weight is preferably 2,000,000 or less, more preferably 1,800,000 or less, and further preferably 1,500,000 or less, from the viewpoint of cross-linking uniformity. Besides, in the specification, the weight-average molecular weight of the SBR can be determined in terms of a standard polystyrene based on measurement values obtained by a gel permeation chromatography (GPC) (for example, GPC-8000 Series, manufactured by Tosoh Corporation, Detector: differential refractometer, Column: TSKGEL SUPERMULTIPORE HZ-M, manufactured by Tosoh Corporation).

A content of the SBR in 100% by mass of the rubber component when the rubber compositions constituting the first layer 6 and the second layer 7 comprise the SBR is preferably 40% by mass or more, more preferably 50% by mass or more, further preferably 60% by mass or more, and particularly preferably 70% by mass or more, from the viewpoint of wet performance. Moreover, an upper limit of a content of the SBR in the rubber component is not particularly limited and may be 100% by mass. Besides, a content of the SBR in 100% by mass of the rubber component when the rubber composition constituting the third layer 8 comprises the SBR is not particularly limited.

### (BR)

The BR is not particularly limited, and those commonly used in the tire industry can be used, such as, for example, a BR having a cis content of less than 50% by mass (a low cis BR), a BR having a cis content of 90% or more by mass (a high cis BR), a rare earth-based butadiene rubber synthesized using a rare earth element-based catalyst (a rare earth-based BR), a BR containing a syndiotactic polybutadiene crystal (an SPB-containing BR), a modified BR (a high cis modified BR, a low cis modified BR), and the like. Examples of the modified BR include a BR modified with a functional group or the like similar to that described in the SBRs above. These BRs may be used alone or two or more thereof may be used in combination.

As the high cis BR, those commercially available from Zeon Corporation, Ube Industries, Ltd., JSR Corporation, etc. can be used, for example. When a high cis BR is comprised, low temperature characteristics and abrasion resistance can be improved. The cis content is preferably 95% by mass or more, more preferably 96% by mass or more, further preferably 97% by mass or more, and particularly preferably 98% by mass or more. Besides, in the specification, the cis content (cis-1,4-bond butadiene unit amount) is a value calculated by infrared absorption spectrometry.

As the rare earth-based BR, those synthesized using a rare earth element-based catalyst and having a vinyl content of preferably 1.8 mol% or less, more preferably 1.0 mol% or less, and further preferably 0.8% mol or less, and a cis content of preferably 95% by mass or more, more preferably 96% by mass or more, further preferably 97% by mass or more, and particularly preferably 98% by mass or more can be used. As the rare earth-based BR, those commercially available from LANXESS, etc. can be used, for example.

Examples of the SPB-containing BR include those in which a 1,2-syndiotactic polybutadiene crystal is chemically bonded with the BR and dispersed, but not those in which the crystal is simply dispersed in the BR. As such an SPB-containing BR, those commercially available from Ube Industries, Ltd., etc., can be used.

As the modified BR, a modified butadiene rubber (modified BR) modified with a functional group comprising at least one element selected from the group consisting of silicon, nitrogen, and oxygen at its terminal and/or main chain is suitably used.

Examples of other modified BRs include those obtained by polymerizing 1,3-butadiene with a lithium initiator and then adding a tin compound and in which a modified BR molecule is bonded by a tin-carbon bond at its terminal (a tin-modified BR), and the like. Moreover, the modified BR may be hydrogenated or may not be hydrogenated.

The previously-listed BRs may be used alone or two or more thereof may be used in combination.

A weight-average molecular weight (Mw) of the BR is preferably 300,000 or more, more preferably 350,000 or more, and further preferably 400,000 or more, from the viewpoint of abrasion resistance. Moreover, it is preferably 2,000,000 or less, and more preferably 1,000,000 or less, from the viewpoint of cross-linking uniformity. Besides, the weight-average molecular weight of the **BR** can be determined in terms of a standard polystyrene based on measurement values obtained by a gel permeation chromatography (GPC) (for example, GPC-8000 Series, manufactured by Tosoh Corporation, Detector: differential refractometer, Column: TSKGEL SUPERMULTIPORE HZ-M, manufactured by Tosoh Corporation).

A content of the **BR** in 100% by mass of the rubber component when the rubber compositions constituting the first layer 6, the second layer 7, and the third layer 8 comprise the **BR** is preferably 50% by mass or less, more preferably 40% by mass or less, further preferably 30% by mass or less, and particularly preferably 20% by mass or less, from the viewpoint of wet grip performance. Moreover, while a lower limit of a content of the BR when the rubber composition comprises the BR is not particularly limited, it may be 1% by mass or more, 3% by mass or more, 5% by mass or more, 10% by mass or more, or 15% by mass or more, for example.

As a rubber component according to the disclosure, a diene-based rubber modified with a functional group having affinity with silica is suitably used. Specifically, examples thereof include a diene-based rubber modified, at its terminal and/or main chain, with a functional group having affinity with silica. In a case that such a diene-based rubber is compounded, the polymer-silica interaction increases and the reinforcing property improves, causing abrasion resistance to improve. Moreover, the interaction with silica makes it difficult for silica and polymer to move and internal friction decreases, causing fuel efficiency to improve. In particular, in a case that the terminal has a functional group having affinity with silica, the movement of the terminal at which internal friction easily occurs is regulated, allowing internal friction between polymers to be reduced more effectively.

Examples of the functional group having affinity with silica include an epoxy group, a silyl group, an amino group, a hydroxyl group, a carboxyl group, an amide group, a mercapto group, and the like, but they are not limited thereto. Examples of the silyl group include, for example, an alkoxysilyl group such as trimethoxysilyl, triethoxysilyl, triisopropoxysilyl, dimethoxymethylsilyl, diethoxymethylsilyl, dimethylmethoxysilyl, dimethylethoxysilyl, and the like; an acetoxysilyl group such as triacetoxysilyl, diacetoxymethylsilyl, acetoxydimethylsilyl, and the like; a chlorosilyl group such as chlorodimethylsilyl, dichloromethylsilyl, trichlorosilyl, and the like; and the like.

A diene-based rubber modified with the functional group having affinity with silica is specifically exemplified by an SBR or BR modified with an alkoxysilyl group, and is preferably the SBR modified with an alkoxysilyl group.

When the rubber component comprises the diene-based rubber modified with the functional group having affinity with silica, the content thereof is preferably 40% by mass or more, more preferably 50% by mass or more, further preferably 60% by mass or more, and particularly preferably 70% by mass or more. Moreover, an upper limit of a content of the diene-based rubber in the rubber component is not particularly limited and may be 100% by mass.

### (Other rubber components)

As the rubber component according to the disclosure, rubber components other than the above-described isoprene-based rubbers, SBRs, and BRs may be contained. As other rubber components, a cross-linkable rubber component commonly used in the tire industry can be used, such as, for example, a styrene-isoprene-butadiene copolymer rubber (SIBR), a styrene-isobutylene-styrene block copolymer (SIBS), a chloroprene rubber (CR), an acrylonitrile-butadiene rubber (NBR), a hydrogenated nitrile rubber (HNBR), a butyl rubber (IIR), an ethylene propylene rubber, a polynorbornene rubber, a silicone rubber, a polyethylene chloride rubber, a fluororubber (FKM), an acrylic rubber (ACM), a hydrin rubber, and the like. These other rubber components may be used alone or two or more thereof may be used in combination.

### <Filler>

In the rubber composition for tread, according to the disclosure, a filler comprising carbon black and/or silica is suitably used. The rubber compositions constituting the first layer 6 and the second layer 7 comprise, as a filler, silica and, more preferably, carbon black and silica. The rubber composition constituting the third layer 8 comprises carbon black as a filler.

### (Carbon black)

As carbon black, those common in the tire industry can be appropriately used. Examples thereof include GPF, FEF, HAF, ISAF, SAF, and the like, for example. These carbon blacks may be used alone or two or more thereof may be used in combination.

A nitrogen adsorption specific surface area (N₂SA) of carbon black is preferably 10 m²/g or more, and more preferably 20 m²/g or more, from the viewpoint of reinforcing property. Moreover, from the viewpoints of fuel efficiency and processability, it is preferably 200 m²/g or less, more preferably 150 m²/g or less, further preferably 100 m²/g or less, further preferably 80 m²/g or less, and particularly preferably 50 m²/g or less. Besides, the N₂SA of carbon black is a value measured according to Japanese Industrial Standard JIS K 6217-2 "Carbon black for rubber-Fundamental characteristics-Part 2: Determination of specific surface area-Nitrogen adsorption methods-Single-point procedures".

When the rubber composition comprises the carbon black, the content thereof based on 100 parts by mass of the rubber component is, from the viewpoints of abrasion resistance and wet grip performance, preferably 1 parts by mass or more, more preferably 3 parts by mass or more, and further preferably 5 parts by mass or more. Moreover, from the viewpoint of fuel efficiency, it is preferably 50 parts by mass or less, more preferably 40 parts by mass or less, further preferably 20 parts by mass or less, further preferably 10 parts by mass or less, and particularly preferably 8 parts by mass or less.

### (Silica)

Silica is not particularly limited, and those common in the tire industry can be used, such as silica prepared by a dry process (anhydrous silica), silica prepared by a wet process (hydrous silica), and the like, for example. Among them, hydrous silica prepared by a wet process is preferable because it has many silanol groups. These silicas may be used alone or two or more thereof may be used in combination.

A nitrogen adsorption specific surface area (N₂SA) of silica is preferably 140 m²/g or more, more preferably 170 m²/g or more, and further preferably 200 m²/g or more, from the viewpoints of fuel efficiency and abrasion resistance. Moreover, it is preferably 350 m²/g or less, more preferably 300 m²/g or less, and further preferably 250 m²/g or less, from the viewpoints of fuel efficiency and processability. Besides, the N₂SA of silica in the specification is a value measured by the BET method according to ASTM D3037-93.

A content of silica in the rubber composition based on 100 parts by mass of the rubber component when the rubber composition comprises silica is preferably 50 parts by mass or more, more preferably 60 parts by mass or more, further preferably 70 parts by mass or more, further preferably 80 parts by mass or more, further preferably 90 parts by mass or more, and particularly preferably 100 parts by mass or more, from the viewpoint of wet grip performance. Moreover, it is preferably 140 parts by mass or less, more preferably 130 parts by mass or less, further preferably 120 parts by mass or less, and particularly preferably 110 parts by mass or less, from the viewpoint of abrasion resistance.

At least one of the rubber compositions constituting the first layer 6 and the second layer 7 comprises, based on 100 parts by mass of the rubber component, preferably 70 parts by mass or more, more preferably 80 parts by mass or more, further preferably 90 parts by mass or more, and particularly preferably 100 parts by mass or more of silica.

A total content of silica and carbon black based on 100 parts by mass of the rubber component is, from the viewpoint of abrasion resistance, preferably 40 parts by mass or more, more preferably 50 parts by mass or more, and further preferably 60 parts by mass or more. Moreover, from the viewpoints of fuel efficiency and elongation at break, it is preferably 160 parts by mass or less, more preferably 140 parts by mass or less, and further preferably 120 parts by mass or less.

In the rubber compositions constituting the first layer 6 and the second layer 7, based on 100 parts by mass of the rubber component, a silica content is greater than a carbon black content from the viewpoint of the balance of fuel efficiency, wet grip performance, and abrasion resistance. A proportion of silica with respect to a total content of silica and carbon black in the first layer 6 and the second layer 7 is preferably 60% by mass or more, more preferably 70% by mass or more, further preferably 80% by mass or more, further preferably 85% by mass or more, and particularly preferably 90% by mass or more. Besides, a containing percentage of silica and carbon black in the third layer 8 is not particularly limited, but a proportion of carbon black with respect to a total content of silica and carbon black may be 50% by mass or more, 70% by mass or more, 90% by mass or more, or 100% by mass or more, for example.

### (Silane coupling agent)

Silica is preferably used in combination with a silane coupling agent. The rubber compositions constituting the first layer 6 and the second layer 7 comprise a mercapto-based silane coupling agent as a silane coupling agent, and other silane coupling agents may be used in combination therewith. Compounding the mercapto-based silane coupling agent makes it possible to further improve the reactivity of silica and polymer.

The mercapto-based silane coupling agent is preferably a compound represented by the following Formula (1) and/or a compound comprising a bond unit A represented by the following Formula (2) and a bond unit B represented by the following Formula (3): 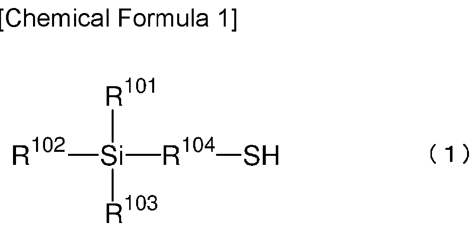 (Wherein, each of R¹⁰¹, R¹⁰², and R¹⁰³ independently represents a group represented by a C₁₋₁₂ alkyl, a C₁₋₁₂ alkoxy, or a -O-(R¹¹¹-O)_{z}-R¹¹² (Each of z R¹¹¹s independently represents a divalent hydrocarbon group having 1 to 30 carbon atoms; R¹¹² represents a C₁₋₃₀ alkyl, a C₂₋₃₀ alkenyl, a C₆₋₃₀ aryl, or a C₇₋₃₀ aralkyl; z represents an integer of 1 to 30); and R¹⁰⁴ represents a C₁₋₆ alkylene.) 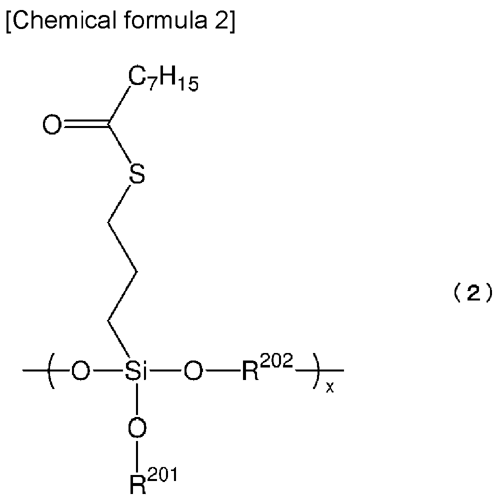 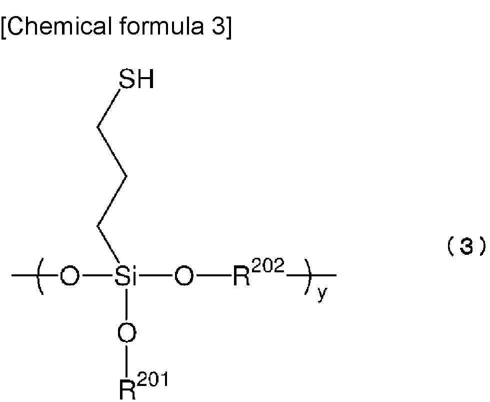 (Wherein, x represents an integer of 0 or more; y represents an integer of 1 or more; R²⁰¹ represents a hydrogen atom, or a C₁₋₃₀ alkyl, a C₂₋₃₀ alkenyl, or a C₂₋₃₀ alkynyl, which may be substituted with a halogen atom, hydroxyl or carboxyl; R²⁰² represents a C₁₋₃₀ alkylene, a C₂₋₃₀ alkenylene, or a C₂₋₃₀ alkynylene; wherein R²⁰¹ and R²⁰² may form a ring structure.)

Examples of the compound represented by Formula (1) include, for example, 3-mercaptopropyltrimethoxysilane, 3-mercaptopropyltriethoxysilane, 2-mercaptoethyltrimethoxysilane, 2-mercaptoethyltriethoxysilane, and a compound represented by Formula (4) below (Si363 manufactured by Evonik Degussa), and the compound represented by Formula (4) below can be suitably used. They may be used alone or two or more thereof may be used in combination.

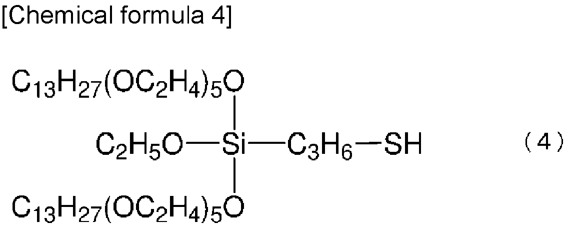

Examples of the compound comprising the bond unit A represented by Formula (2) and the bond unit B represented by Formula (3) include those manufactured by Momentive Performance Materials, and the like, for example. They may be used alone or two or more thereof may be used in combination.

A content of the mercapto-based silane coupling agent based on 100 parts by mass of silica is, from the viewpoint of enhancing the dispersibility of silica, preferably 0.5 parts by mass or more, more preferably 1.5 parts by mass or more, and further preferably 2.5 parts by mass or more. Moreover, it is preferably 20 parts by mass or less, more preferably 15 parts by mass or less, and further preferably 10 parts by mass or less, from the viewpoints of cost and processability.

In addition to the mercapto-based silane coupling agent, any silane coupling agent conventionally used in combination with silica can be used, and examples thereof include, for example, a sulfide-based silane coupling agent such as bis(3-triethoxysilylpropyl)disulfide, bis(3-triethoxysilylpropyl)tetrasulfide, and the like; a vinyl-based silane coupling agent such as vinyltriethoxysilane, vinyltrimethoxysilane, and the like; an amino-based silane coupling agent such as 3-aminopropyltriethoxysilane, 3-aminopropyltrimethoxysilane, 3-(2-aminoethyl) aminopropyltriethoxysilane, and the like; a glycidoxy-based silane coupling agent such as γ-glycidoxypropyltriethoxysilane, γ-glycidoxypropyltrimethoxysilane, and the like; a nitro-based silane coupling agent such as 3-nitropropyltrimethoxysilane, 3-nitropropyltriethoxysilane, and the like; a chloro-based silane coupling agent such as 3-chloropropyltrimethoxysilane, 3-chloropropyltriethoxysilane, and the like; and the like. Among them, the sulfide-based silane coupling agent is preferable. These silane coupling agents may be used alone or two or more thereof may be used in combination.

A content of the silane coupling agent (when the silane coupling agent is used in a plurality, a total content of all of the silane coupling agents) based on 100 parts by mass of silica is preferably 1.0 parts by mass or more, more preferably 2.0 parts by mass or more, and further preferably 2.5 parts by mass or more, from the viewpoint of increasing the dispersibility of silica. Moreover, it is preferably 20 parts by mass or less, more preferably 15 parts by mass or less, and further preferably 10 parts by mass or less, from the viewpoints of cost and processability.

As fillers, besides carbon black and silica, other fillers can further be used. While such fillers are not particularly limited, any one of fillers commonly used in this field, such as aluminum hydroxide, alumina (aluminum oxide), calcium carbonate, magnesium sulfate, talc, clay, and the like, for example, can be used. Among them, aluminum hydroxide is suitably used because it is good in abrasion resistance, durability, wet grip performance, and fuel efficiency. These other fillers may be used alone or two or more thereof may be used in combination.

A nitrogen adsorption specific surface area (N₂SA) of aluminum hydroxide is preferably 5 m²/g or more, and more preferably 10 m²/g or more, from the viewpoint of wet grip performance. Moreover, from the viewpoints of dispersibility, reaggregation prevention, and abrasion resistance of aluminum hydroxide, it is preferably 50 m²/g or less, more preferably 40 m²/g or less, and further preferably 30 m²/g or less. Besides, the BET specific surface area of aluminum hydroxide herein is a value measured by a BET method in accordance with ASTM D3037-81.

An average particle size (D50) of aluminum hydroxide is, from the viewpoints of dispersibility, reaggregation prevention, and abrasion resistance of aluminum hydroxide, preferably 0.1 µm or more, more preferably 0.2 µm or more, and further preferably 0.3 µm or more. Moreover, from the viewpoint of abrasion resistance, it is preferably 3.0 µm or less and more preferably 2.0 µm or less. Besides, the average particle size (D50) in the specification is a particle size at a cumulative mass value of 50% on a particle size distribution curve determined by a particle size distribution measuring apparatus.

When the rubber composition comprises aluminum hydroxide, a content of aluminum hydroxide based on 100% by mass of the rubber component is, from the viewpoint of wet grip performance, preferably 1.0 parts by mass or more, more preferably 3.0 parts by mass or more, and further preferably 5.0 parts by mass or more. Moreover, the content of aluminum hydroxide is, from the viewpoint of abrasion resistance, 50 parts by mass or less, 40 parts by mass or less, and 30 parts by mass or less.

### <Softener>

The rubber composition for tread, according to the disclosure, preferably comprises a softener. Examples of the softener include a resin component, oil, a liquid polymer, an ester-based plasticizer, and the like, for example.

The resin component is not particularly limited, and examples thereof include a petroleum resin, a terpene-based resin, a rosin-based resin, a phenol-based resin, and the like being commonly used in the tire industry. These resin components may be used alone or two or more thereof may be used in combination.

In the specification, the "C5-based petroleum resin" refers to a resin obtained by polymerizing a C5 fraction. Examples of the C5 fraction include, for example, a petroleum fraction equivalent to 4 to 5 carbon atoms such as cyclopentadiene, pentene, pentadiene, isoprene, and the like. As the C5-based petroleum resin, a dicyclopentadiene resin (DCPD resin) is suitably used.

In the specification, the "aromatic-based petroleum resin" refers to a resin obtained by polymerizing a C9 fraction, and may be hydrogenated or modified. Examples of the C9 fraction include, for example, a petroleum fraction equivalent to 8 to 10 carbon atoms such as vinyltoluene, alkylstyrene, indene, and methyl indene. As specific examples of the aromatic-based petroleum resin, for example, a coumarone indene resin, a coumarone resin, an indene resin, and an aromatic vinyl-based resin are suitably used. As the aromatic vinyl-based resin, a homopolymer of α-methylstyrene or styrene or a copolymer of α-methylstyrene and styrene is preferable, and a copolymer of α-methylstyrene and styrene is more preferable, because it is economical, easy to be processed, and good in heat generation. As the aromatic vinyl-based resin, for example, those commercially available from Kraton Corporation, Eastman Chemical Company, etc. can be used.

In the specification, a "C5-C9-based petroleum resin" refers to a resin obtained by copolymerizing the C5 fraction and the C9 fraction, and may be hydrogenated or modified. Examples of the C5 fraction and the C9 fraction include the above-described petroleum fractions. As the C5-C9-based petroleum resin, for example, those commercially available from Tosoh Corporation, Zibo Luhua Hongjin New Material Co., Ltd., etc. can be used.

Examples of the terpene-based resin include a polyterpene resin consisting of at least one selected from terpene compounds such as α-pinene, β-pinene, limonene, dipentene, and the like; an aromatic-modified terpene resin made from the terpene compound and an aromatic compound; a terpene phenol resin made from a terpene compound and a phenol-based compound; and those obtainable by hydrogenating these terpene-based resins (hydrogenated terpene-based resins). Examples of the aromatic compound used as a raw material for the aromatic-modified terpene resin include, for example, styrene, α-methylstyrene, vinyltoluene, divinyltoluene, and the like. Examples of the phenol-based compound used as a raw material for the terpene phenol resin include, for example, phenol, bisphenol A, cresol, xylenol, and the like.

The rosin-based resin is not particularly limited, and examples thereof include, for example, a natural resin rosin, and a rosin modified resin being the natural resin rosin modified by hydrogenation, disproportionation, dimerization, or esterification.

The phenol-based resin is not particularly limited, and examples thereof include a phenolformaldehyde resin, an alkylphenolformaldehyde resin, an alkylphenol acetylene resin, an oil-modified phenolformaldehyde resin, and the like.

A softening point of the resin component is preferably 60°C or higher and more preferably 65°C or higher, from the viewpoint of wet grip performance. Moreover, it is preferably 150°C or lower, more preferably 140°C or lower, and further preferably 130°C or lower, from the viewpoints of processability and improvement in dispersibility of a rubber component with a filler. Besides, in the specification, the softening point can be defined as a temperature at which a sphere drops when the softening point specified in Japanese Industrial Standard JIS K 6220-1: 2001 is measured with a ring and ball softening point measuring device.

When the rubber composition comprises the resin component, the content thereof based on 100 parts by mass of the rubber component is, from the viewpoint of wet grip performance, preferably 1 parts by mass or more, more preferably 3 parts by mass or more, and further preferably 5 parts by mass or more. Moreover, it is preferably 60 parts by mass or less, more preferably 50 parts by mass or less, further preferably 40 parts by mass or less, and particularly preferably 30 parts by mass or less, from the viewpoint of suppression of heat generation.

Examples of oil include, for example, a process oil, a vegetable oil and fat, an animal oil and fat, and the like. Examples of the process oil include a paraffin-based process oil, a naphthene-based process oil, an aromatic-based process oil, and the like. Moreover, as an environmental measure, a process oil having a low content of a polycyclic aromatic compound (PCA) can also be used. Examples of the process oil having a low content of a PCA include mild extraction solvates (MES), a treated distillate aromatic extract (TDAE), a heavy naphthenic oil, and the like.

When the rubber composition comprises the oil, the content thereof based on 100 parts by mass of the rubber component is, from the viewpoint of processability, preferably 5 parts by mass or more, more preferably 10 parts by mass or more, and further preferably 15 parts by mass or more. Moreover, it is preferably 120 parts by mass or less, more preferably 100 parts by mass or less, and further preferably 90 parts by mass or less, from the viewpoint of abrasion resistance. Besides, in the specification, the content of oil also includes an amount of oil contained in an oil-extended rubber.

A liquid rubber is not particularly limited as long as it is a polymer in liquid state at room temperature (25°C), and examples of the liquid rubber include, for example, a liquid butadiene rubber (liquid BR), a liquid styrene-butadiene rubber (liquid SBR), a liquid isoprene rubber (liquid IR), a liquid styrene-isoprene polymer (liquid SIR), a liquid farnesene rubber, and the like. These may be used alone or two or more thereof may be used in combination.

When the rubber composition comprises the liquid rubber, the content thereof based on 100 parts by mass of the rubber component is preferably 1 parts by mass or more, more preferably 2 parts by mass or more, further preferably 3 parts by mass or more, and particularly preferably 5 parts by mass or more. Moreover, a content of the liquid rubber is preferably 50 parts by mass or less, more preferably 40 parts by mass or less, and further preferably 20 parts by mass or less.

Examples of the ester-based plasticizers include, for example, dibutyl adipate (DBA), diisobutyl adipate (DIBA), dioctyl adipate (DOA), di(2-ethylhexyl) azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. These ester-based plasticizers may be used alone or two or more thereof may be used in combination.

A content of the softener (when the softener is used in a plurality, a total content of all of the softeners) based on 100 parts by mass of the rubber component is preferably 5 parts by mass or more, more preferably 10 parts by mass or more, and further preferably 15 parts by mass or more, from the viewpoint of wet grip performance. Moreover, it is preferably 120 parts by mass or less, more preferably 100 parts by mass or less, further preferably 90 parts by mass or less, and particularly preferably 80 parts by mass or less, from the viewpoint of processability.

### <The other compounding agents>

The rubber composition according to the disclosure can appropriately comprise compounding agents commonly used in the tire industry conventionally, such as, for example, wax, a processing aid, stearic acid, zinc oxide, an antioxidant, a vulcanizing agent, a vulcanization accelerator, and the like, in addition to the previously-described components.

When the rubber composition comprises wax, the content thereof based on 100 parts by mass of the rubber component is, from the viewpoint of weather resistance of a rubber, preferably 0.5 parts by mass or more and more preferably 1 parts by mass or more. Moreover, it is preferably 10 parts by mass or less and more preferably 5 parts by mass or less, from the viewpoint of preventing whitening of a tire due to bloom.

Examples of the processing aid include, for example, a fatty acid metal salt, fatty acid amide, an amide ester, a silica surface active agent, a fatty acid ester, a mixture of a fatty acid metal salt and an amide ester, a mixture of a fatty acid metal salt and fatty acid amide, and the like. These processing aids may be used alone or two or more thereof may be used in combination. As the processing aids, those commercially available from Schill & Seilacher, GmbH & Co., Performance Additives L.L.C., etc., for example, can be used.

When the rubber composition comprises the processing aid, the content thereof based on 100 parts by mass of the rubber component is, from the viewpoint of exhibiting the effect of improvement of processability, preferably 0.5 parts by mass or more and more preferably 1 parts by mass or more. Moreover, it is preferably 10 parts by mass or less and more preferably 8 parts by mass or less, from the viewpoints of abrasion resistance and breaking strength.

The antioxidant is not particularly limited, and examples thereof include, for example, each amine-based, quinoline-based, quinone-based, phenol-based, and imidazole-based compound, and an antioxidant such as a carbamate metal salt, preferably a phenylenediamine-based antioxidant such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, and the like, and a quinoline-based antioxidant such as 2,2,4-trimethyl-1,2-dihydroquinolin polymer, 6-ethoxy-2,2,4-trimethyl-1,2-dihydroquinolin, and the like. These antioxidants may be used alone or two or more thereof may be used in combination.

When the rubber composition comprises the antioxidant, the content thereof based on 100 parts by mass of the rubber component is, from the viewpoint of ozone crack resistance of a rubber, preferably 0.5 parts by mass or more and more preferably 1 parts by mass or more. Moreover, it is preferably 10 parts by mass or less and more preferably 5 parts by mass or less, from the viewpoints of abrasion resistance and wet grip performance.

When the rubber composition comprises stearic acid, the content thereof based on 100 parts by mass of the rubber component is, from the viewpoint of processability, preferably 0.5 parts by mass or more and more preferably 1 parts by mass or more. Moreover, it is preferably 10 parts by mass or less and more preferably 5 parts by mass or less, from the viewpoint of vulcanization rate.

When the rubber composition comprises zinc oxide, the content thereof based on 100 parts by mass of the rubber component is, from the viewpoint of processability, preferably 0.5 parts by mass or more and more preferably 1 parts by mass or more. Moreover, it is preferably 10 parts by mass or less and more preferably 5 parts by mass or less, from the viewpoint of abrasion resistance.

Sulfur is suitably used as the vulcanizing agent. As sulfur, a powdered sulfur, an oil-treated sulfur, a precipitated sulfur, a colloidal sulfur, an insoluble sulfur, a highly dispersible sulfur, and the like can be used.

A content of sulfur based on 100 parts by mass of the rubber component when the rubber composition comprises sulfur as the vulcanizing agent is preferably 0.1 parts by mass or more, more preferably 0.3 parts by mass or more, and further preferably 0.5 parts by mass or more, from the viewpoint of securing a sufficient vulcanization reaction. Moreover, it is preferably 5.0 parts by mass or less, more preferably 4.0 parts by mass or less, and further preferably 3.0 parts by mass or less, from the viewpoint of preventing deterioration. Besides, a content of a vulcanizing agent when using an oil-containing sulfur as the vulcanizing agent shall be a total content of pure sulfur amounts comprised in the oil-containing sulfur.

Examples of vulcanizing agents other than sulfur include, for example, alkylphenol-sulfur chloride condensate, 1,6-hexamethylene-sodium dithiosulfate dehydrate, 1,6-bis(N,N'-dibenzylthiocarbamoyldithio)hexane, and the like. As these vulcanizing agents other than sulfur, those commercially available from Taoka Chemical Co., Ltd., LANXESS, Flexsys, etc. can be used.

Examples of the vulcanization accelerator include, for example, sulfenamide-based, thiazole-based, thiuram-based, thiourea-based, guanidine-based, dithiocarbamic acid-based, aldehyde-amine-based or aldehyde-ammonia-based, imidazoline-based, and xanthate-based vulcanization accelerators. These vulcanization accelerators may be used alone or two or more thereof may be used in combination. Among them, one or more vulcanization accelerators selected from the group consisting of sulfenamide-based, guanidine-based, and thiazole-based vulcanization accelerators are preferable, and a combined use of sulfenamide-based and guanidine-based vulcanization accelerators is more preferable.

Examples of the sulfenamide-based vulcanization accelerator include, for example, N-tert-butyl-2-benzothiazolylsulfenamide (TBBS), N-cyclohexyl-2-benzothiazolylsulfenamide (CBS), N,N-dicyclohexyl-2-benzothiazolylsulfenamide (DCBS), and the like. Among them, N-cyclohexyl-2-benzothiazolylsulfenamide (CBS) is preferable.

Examples of the guanidine-based vulcanization accelerator include, for example, 1,3-diphenylguanidine (DPG), 1,3-di-o-tolylguanidine, 1-o-tolylbiguanide, a di-o-tolylguanidine salt of dicatechol borate, 1,3-di-o-cumenylguanidine, 1,3-di-o-biphenylguanidine, 1,3-di-o-cumenyl-2-propionylguanidine, and the like. Among them, 1,3-diphenylguanidine (DPG) is preferable.

Examples of the thiazole-based vulcanization accelerator include, for example, 2-mercaptobenzothiazole, a cyclohexylamine salt of 2-mercaptobenzothiazole, di-2-benzothiazolyl disulfide, and the like. Among them, 2-mercaptobenzothiazole is preferable.

When the rubber composition comprises the vulcanization accelerator, the content thereof based on 100 parts by mass of the rubber component is preferably 1 parts by mass or more and more preferably 2 parts by mass or more. Moreover, the content of the vulcanization accelerator based on 100 parts by mass of the rubber component is preferably 8 parts by mass or less, more preferably 7 parts by mass or less, and further preferably 6 parts by mass or less. When the content of the vulcanization accelerators is within the above-described ranges, there is a tendency to be able to secure breaking strength and elongation.

The rubber composition according to the disclosure can be manufactured by a known method. For example, it can be manufactured by kneading each of the previously-described components using a rubber kneading apparatus such as an open roll, a closed type kneader (Bunbury mixer, kneader, etc.), and the like.

The kneading step comprises, for example, a base kneading step of kneading compounding agents and additives other than vulcanizing agents and vulcanization accelerators, and a final kneading (F kneading) step of adding vulcanizing agents and vulcanization accelerators to the kneaded product obtained in the base kneading step and kneading them. Furthermore, the base kneading step can also be divided into a plurality of steps, if desired.

Kneading conditions are not particularly limited, and, for example, a method of kneading at a discharge temperature of 150 to 170°C for 3 to 10 minutes in the base kneading step and kneading at 70 to 110°C for 1 to 5 minutes in the final kneading step is exemplified. Vulcanizing conditions are not particularly limited, and, for example, a method of vulcanizing at 150 to 200°C for 10 to 30 minutes is exemplified.

### [Tire]

The tire according to the disclosure comprises a tread comprising the first layer 6, the second layer 7, and the third layer 8, and may be a pneumatic tire or a non-pneumatic tire. Moreover, examples of the pneumatic tire include a tire for a passenger car, a tire for a truck/bus, a tire for a motorcycle, a high-performance tire, and the like, and the pneumatic tire is suitably used as the tire for a passenger car in particular. Besides, the high-performance tire in the specification is a tire having a particularly good grip performance and is a concept even including a racing tire used for a racing vehicle.

The tire comprising the tread comprising the first layer 6, the second layer 7, and the third layer 8 can be manufactured by a usual method using the previously-described rubber composition. In other words, the tire can be manufactured by extruding, with an extruder comprising a base having a predetermined shape, unvulcanized rubber compositions compounded with each of the above-described components based on the rubber component as necessary into shapes of the first layer 6, the second layer 7, and the third layer 8, attaching them together with other tire members on a tire molding machine, and molding them by a usual method to form an unvulcanized tire, followed by heating and pressurizing this unvulcanized tire in a vulcanizing machine.

### EXAMPLE

Although the disclosure will be described based on Examples, the disclosure is not to be limited to these Examples.

Various chemicals used in Examples and Comparative examples are shown below:
NR: TSR20
SBR: Modified solution polymerized SBR manufactured in the below-described Manufacturing example 1 (styrene content: 30% by mass, vinyl content: 52 mol%, Mw: 250,000, non-oil-extended product)
BR: UBEPOL BR (registered trademark) 150B (vinyl content: 1.5 mol%, cis content: 97%, Mw: 440,000), manufactured by Ube Industries, Ltd.
Carbon black: Diablack N220 (N₂SA: 115 m²/g), manufactured by Mitsubishi Chemical Corporation
Silica: ULTRASIL (registered trademark) 9100GR (N₂SA: 230 m²/g, average primary particle size: 15 nm), manufactured by Evonik Degussa
Aluminum hydroxide: APYRAL 120E (average particle size: 0.9 µm, N₂SA: 11 m²/g), manufactured by Nabaltec AG
Silane coupling agent 1: NXT-Z45 (mercapto-based silane coupling agent), manufactured by Momentive Performance Materials
Silane coupling agent 2: Si266 (bis(3-triethoxysilylpropyl)disulfide)), manufactured by Evonik Degussa
Oil: Process oil X-140, manufactured by JXTG Energy Co., Ltd.
Resin component: SYLVARES SA85 (Copolymer of α-methylstyrene and styrene, Softening point: 85 C), manufactured by Kraton Corporation
Liquid rubber: Ricon 100 (liquid SBR), manufactured by Clay Valley Co., Ltd.
Wax: Sunnock N, manufactured by Ouchi Shinko Chemical Industrial Co., Ltd.
Antioxidant 1: NOCRAC 6C (N-(1,3-dimethylbutyl)-N'-phenyl-p-phenylenediamine), manufactured by Ouchi Shinko Chemical Industrial Co., Ltd.
Antioxidant 2: NOCRAC 224 (2,2,4-trimethyl-1,2-dihydroquinoline polymer), manufactured by Ouchi Shinko Chemical Industrial Co., Ltd.
Stearic acid: Bead stearic acid "Tsubaki", manufactured by NOF CORPORATION
Zinc oxide: Zinc oxide No. 2, manufactured by Mitsui Mining & Smelting Co., Ltd.
Sulfur: Powdered sulfur (5% oil-containing powdered sulfur), manufactured by Tsurumi Chemical Industry Co., Ltd.
Vulcanization accelerator 1: Nocceler CZ (N-cyclohexyl-2-benzothiazolylsulfenamide, manufactured by Ouchi Shinko Chemical Industrial Co., Ltd.)
Vulcanization accelerator 2: Soxinol D-G (N, N'-diphenylguanidine), manufactured by Sumitomo Chemical, Co., Ltd.

### Manufacturing example 1: Synthesis of SBR1

Cyclohexane, tetrahydrofuran, styrene, and 1,3-butadiene were charged into a nitrogen-substituted autoclave reactor. The temperature of the contents of the reactor was adjusted to 20°C, and n-butyllithium was added to initiate polymerization. Polymerization was performed under an adiabatic condition, and the temperature reached 85°C of the maximum temperature. When a polymerization conversion rate reached 99%, 1,3-butadiene was added, and after further polymerization for 5 minutes, N,N-bis(trimethylsilyl)-3-aminopropyltrimethoxysilane was added as a denaturing agent to perform reaction. After completion of the polymerization reaction, 2,6-di-tert-butyl-p-cresol was added. Next, the mixed product was removed of solvent by steam stripping and dried by a heat roll which temperature was adjusted to 110°C to obtain an SBR 1.

### (Examples and Comparative examples)

According to the compounding formulations shown in Table 1, using a 1.7 L closed Banbury mixer, all chemicals other than sulfur and vulcanization accelerators were kneaded for 1 to 10 minutes until a discharge temperature reached 150 to 160°C to obtain a kneaded product. Next, using a twin-screw open roll, sulfur and vulcanization accelerators were added to the obtained kneaded product, and the mixture was kneaded for 4 minutes until the temperature reached 105°C to obtain an unvulcanized rubber composition. The obtained unvulcanized rubber composition was extruded into shapes of first, second, and third layers of a tread and attached together with other tire members to produce an unvulcanized tire, followed by vulcanization under a condition of 150°C for 30 minutes to obtain each of test tires shown in Table 2 (size: 205/55R15, rim: 15 × 6.0J, internal pressure: 230 kPa).

### <Fuel efficiency>

Using a rolling resistance testing machine, rolling resistance was measured with each of the test tires being made to run under the conditions of rim 15 × 6JJ; internal pressure 230 kPa; load 3.43 kN; and speed 80 km/h. With rolling resistance of the test tire in Comparative example 8 being set to 100, rolling resistance was expressed as an index value using the below-described calculation equation. The greater the numerical value, the better the fuel efficiency. (Fuel efficiency index) = (Rolling resistance of tire in Comparative example 8) / (Rolling resistance of each of test tires) x 100

### <Wet grip performance>

Each of the test tires was mounted to all wheels of a (2000cc domestic FF) vehicle, and the braking distance was measured from the point at which brakes were applied when traveling at a speed of 100 km/h on a wet asphalt road surface. With the braking distance of the test tire in Comparative example 8 being set to 100, wet grip performance was expressed as an index value using the below-described calculation equation. It indicates that the greater the numerical value, the better the wet grip performance. (Wet grip performance index) = (Braking distance of tire of Comparative example 8) / (Braking distance of each of test tires) x 100

### <Abrasion resistance>

Each of the test tires was mounted to all wheels of a (2000cc domestic FF) vehicle and made to run, and change in pattern groove depth after traveling 50,000 km was measured. The inverse value of the amount of change was expressed as an index value, with Comparative example 8 being set to 100. The greater the numerical value, the better the abrasion resistance.

### <Durability>

Each of the test tires was mounted to all wheels of a (2000cc domestic FF) vehicle, the vehicle was driven on a test course, and the presence/absence of an occurrence of a crack around the interfaces of the first layer and the second layer of the tread at the time of critical grip driving in a meandering manner. Durability index was determined using the below-described calculation equation. It indicates that the greater the numerical value, the better the durability. (Durability index) = (The number of occurrences of crack of tire in Comparative example 8) - (The number of occurrences of crack of each of test tires) + 100

For an overall performance of fuel efficiency, wet grip performance, abrasion resistance, and durability (the total sum of fuel efficiency index, wet grip performance index, abrasion resistance index, and durability index), over 400 is set to be a target performance value.

**Table 1**

| | First layer | | | | | | | | |
|---|---|---|---|---|---|---|---|---|---|
| | A1 | A2 | A3 | A4 | A5 | A6 | A7 | A8 | A9 |
| Compounding amount (part by mass) | | | | | | | | | |
| NR | - | - | - | - | - | - | - | - | - |
| SBR | 80 | 80 | 80 | 80 | 80 | 80 | 80 | 80 | 80 |
| BR | 20 | 20 | 20 | 20 | 20 | 20 | 20 | 20 | 20 |
| Carbon black | 5.0 | 5.0 | 5.0 | 5.0 | 100 | 5.0 | 5.0 | 5.0 | 5.0 |
| Silica | 100 | 100 | 80 | 100 | - | 100 | 100 | 100 | 100 |
| Aluminum hydroxide | - | - | 20 | - | - | - | - | - | - |
| Silane coupling agent 1 | - | 8.0 | 6.4 | 8.0 | - | - | - | - | 8.0 |
| Silane coupling agent 2 | 8.0 | - | - | - | - | 8.0 | 8.0 | 8.0 | - |
| Oil | 30 | 30 | 30 | 40 | 30 | 50 | 50 | 50 | 10 |
| Resin component | 10 | 10 | 10 | 20 | 10 | 20 | 20 | 20 | 20 |
| Liquid rubber | - | - | - | - | - | - | - | - | 10 |
| Wax | 1.0 | 1.0 | 1.0 | 1.0 | 1.0 | 1.0 | 1.0 | 1.0 | 1.0 |
| Antioxidant 1 | 1.0 | 1.0 | 1.0 | 1.0 | 1.0 | 1.0 | 1.0 | 1.0 | 1.0 |
| Antioxidant 2 | 1.5 | 1.5 | 1.5 | 1.5 | 1.5 | 1.5 | 1.5 | 1.5 | 1.5 |
| Stearic acid | 3.0 | 3.0 | 3.0 | 3.0 | 3.0 | 3.0 | 3.0 | 3.0 | 3.0 |
| Zinc oxide | 3.0 | 3.0 | 3.0 | 3.0 | 3.0 | 3.0 | 3.0 | 3.0 | 3.0 |
| Sulfur | 1.0 | 1.0 | 1.0 | 0.8 | 1.0 | 1.0 | 0.8 | 0.8 | 1.0 |
| Vulcanization accelerator 1 | 2.0 | 2.0 | 2.0 | 3.0 | 2.0 | 2.0 | 2.0 | 4.0 | 2.0 |
| Vulcanization accelerator 2 | 1.5 | 1.5 | 1.5 | 2.0 | 1.5 | 1.5 | 1.5 | 2.0 | 1.5 |

| | Second layer | | | | | | | Third layer | |
|---|---|---|---|---|---|---|---|---|---|
| | B1 | B2 | B3 | B4 | B5 | B6 | B7 | C1 | |
| Compounding amount (part by mass) | | | | | | | | | |
| NR | - | - | - | - | - | - | - | 70 | |
| SBR | 80 | 80 | 80 | 80 | 80 | 80 | 80 | - | |
| BR | 20 | 20 | 20 | 20 | 20 | 20 | 20 | 30 | |
| Carbon black | 5.0 | 5.0 | 5.0 | 10 | 5.0 | 5.0 | 5.0 | 40 | |
| Silica | 100 | 100 | 100 | 80 | 100 | 100 | 100 | - | |
| Aluminum hydroxide | - | - | - | - | - | - | - | - | |
| Silane coupling agent 1 | - | 8.0 | 8.0 | 6.4 | - | - | - | - | |
| Silane coupling agent 2 | 8.0 | - | - | - | 8.0 | 8.0 | 8.0 | - | |
| Oil | 15 | 15 | 15 | 15 | 15 | 15 | 15 | 10 | |
| Resin component | 10 | 10 | 5.0 | 10 | - | - | - | - | |
| Liquid rubber | - | - | - | - | - | - | - | - | |
| Wax | 1.0 | 1.0 | 1.0 | 1.0 | 1.0 | 1.0 | 1.0 | 1.0 | |
| Antioxidant 1 | 1.0 | 1.0 | 1.0 | 1.0 | 1.0 | 1.0 | 1.0 | 1.0 | |
| Antioxidant 2 | 1.5 | 1.5 | 1.5 | 1.5 | 1.5 | 1.5 | 1.5 | 1.5 | |
| Stearic acid | 3.0 | 3.0 | 3.0 | 3.0 | 3.0 | 3.0 | 3.0 | 3.0 | |
| Zinc oxide | 3.0 | 3.0 | 3.0 | 3.0 | 3.0 | 3.0 | 3.0 | 3.0 | |
| Sulfur | 1.2 | 1.2 | 1.6 | 1.2 | 1.2 | 2.0 | 2.0 | 1.2 | |
| Vulcanization accelerator 1 | 2.0 | 2.0 | 1.5 | 2.0 | 2.0 | 2.0 | 1.3 | 2.0 | |
| Vulcanization accelerator 2 | 1.0 | 1.0 | 1.0 | 1.0 | 1.0 | 1.0 | 1.0 | 1.0 | |

**Table2**

| | Comparative example | | | | | | | | | |
|---|---|---|---|---|---|---|---|---|---|---|
| | 1 | 2 | 3 | 4 | 5 | 6 | 7 | 8 | 9 | 10 |
| First layer compounding | A1 | A6 | A7 | A8 | A1 | A1 | A5 | A2 | A2 | A2 |
| Second layer compounding | B1 | B5 | B6 | B7 | B1 | B2 | B2 | B2 | B1 | B2 |
| Third layer compounding | C1 | C1 | C1 | C1 | C1 | C1 | C1 | C1 | C1 | - |
| Difference in softener content between first layer and second layer | 15 | 55 | 55 | 55 | 15 | 15 | 15 | 15 | 15 | 15 |
| Difference in sulfur content between first layer and second layer | 0.2 | 0.2 | 1.2 | 1.2 | 0.2 | 0.2 | 0.2 | 0.2 | 0.2 | 0.2 |
| Difference in vulcanization accelerator content between first layer and second layer | 0.5 | 0.5 | 0.5 | 3.7 | 0.5 | 0.5 | 0.5 | 0.5 | 0.5 | 0.5 |
| t1 (mm) | 5.1 | 5.1 | 5.1 | 5.1 | 4.5 | 4.5 | 4.5 | 5.1 | 4.5 | 4.5 |
| t2 (mm) | 1.9 | 1.9 | 1.9 | 1.9 | 2.5 | 2.5 | 2.5 | 1.9 | 2.5 | 4.5 |
| t3 (mm) | 2.0 | 2.0 | 2.0 | 2.0 | 2.0 | 2.0 | 2.0 | 2.0 | 2.0 | - |
| H1 (mm) | 6.0 | 6.0 | 6.0 | 6.0 | 6.0 | 6.0 | 6.0 | 6.0 | 6.0 | 6.0 |
| H2 (mm) | 0.9 | 0.9 | 0.9 | 0.9 | 1.5 | 1.5 | 1.5 | 0.9 | 1.5 | 1.5 |
| H2/H1 | 0.15 | 0.15 | 0.15 | 0.15 | 0.25 | 0.25 | 0.25 | 0.15 | 0.25 | 0.25 |

| Index | | | | | | | | | | |
|---|---|---|---|---|---|---|---|---|---|---|
| Fuel efficiency | 96 | 92 | 90 | 91 | 97 | 98 | 83 | 100 | 99 | 95 |
| Wet grip performance | 100 | 106 | 107 | 105 | 98 | 98 | 90 | 100 | 99 | 99 |
| Abrasion resistance | 95 | 88 | 87 | 86 | 96 | 97 | 110 | 100 | 99 | 99 |
| Durability | 100 | 99 | 97 | 96 | 101 | 102 | 100 | 100 | 102 | 102 |
| Overall performance | 391 | 385 | 381 | 378 | 392 | 395 | 383 | 400 | 399 | 395 |

| | Example | | | | | | | | | |
|---|---|---|---|---|---|---|---|---|---|---|
| | 1 | 2 | 3 | 4 | 5 | 6 | 7 | | 8 | |
| First layer compounding | A2 | A2 | A2 | A2 | A3 | A4 | A2 | | A9 | |
| Second layer compounding | B2 | B2 | B2 | B2 | B2 | B3 | B4 | | B2 | |
| Third layer compounding | C1 | C1 | C1 | C1 | C1 | C1 | C1 | | C1 | |
| Difference in softener content between first layer and second layer | 15 | 15 | 15 | 15 | 15 | 40 | 15 | | 15 | |
| Difference in sulfur content between first layer and second layer | 0.2 | 0.2 | 0.2 | 0.2 | 0.2 | 0.8 | 0.2 | | 0.2 | |
| Difference in vulcanization accelerator content between first layer and second layer | 0.5 | 0.5 | 0.5 | 0.5 | 0.5 | 2.5 | 0.5 | | 0.5 | |
| t1 (mm) | 4.5 | 3.6 | 2.4 | 1.2 | 3.6 | 3.6 | 4.5 | | 3.6 | |
| t2 (mm) | 2.5 | 3.4 | 4.6 | 5.8 | 3.4 | 3.4 | 2.5 | | 3.4 | |
| t3 (mm) | 2.0 | 2.0 | 2.0 | 2.0 | 2.0 | 2.0 | 2.0 | | 2.0 | |
| H1 (mm) | 6.0 | 6.0 | 6.0 | 6.0 | 6.0 | 6.0 | 6.0 | | 6.0 | |
| H2 (mm) | 1.5 | 2.4 | 3.6 | 4.8 | 2.4 | 2.4 | 1.5 | | 2.4 | |
| H2/H1 | 0.25 | 0.40 | 0.60 | 0.80 | 0.40 | 0.40 | 0.25 | | 0.40 | |

| Index | | | | | | | | | | |
|---|---|---|---|---|---|---|---|---|---|---|
| Fuel efficiency | 103 | 105 | 108 | 110 | 106 | 107 | 107 | | 104 | |
| Wet grip performance | 100 | 100 | 100 | 99 | 106 | 104 | 100 | | 106 | |
| Abrasion resistance | 101 | 102 | 105 | 107 | 98 | 100 | 100 | | 103 | |
| Durability | 102 | 103 | 103 | 103 | 103 | 102 | 103 | | 103 | |
| Overall performance | 407 | 410 | 416 | 419 | 413 | 413 | 410 | | 416 | |

Based on the results of Tables 1 and 2, it is evident that, with a tire of the disclosure, wherein a tread part is provided with three or more predetermined rubber layers, the rubber layers are made in a specific compounding ratio, and the groove depth in a second layer with respect to the depth of a circumferential groove is set to be a predetermined proportion, there is an improvement in the overall performance of the fuel efficiency, wet grip performance, abrasion resistance, and durability.

### REFERENCE SIGNS LIST

1 Circumferential groove
2 Land part
3 Tread surface
4 Extension line of land part
5 Extension line of deepest part of groove bottom of circumferential groove
6 First layer
7 Second layer
8 Third layer
9 Extension line of outer surface of second layer

## Claims

1. A tire having a tread,
wherein the tread at least comprises a first layer constituting a tread surface, a second layer being arranged adjacent on the inner side of the first layer in the radial direction, and a third layer being present on the inner side of the second layer in the radial direction,
wherein the first layer, the second layer, and the third layer are composed of a rubber composition comprising a rubber component,
wherein the rubber compositions constituting the first layer and the second layer comprise silica and a mercapto-based silane coupling agent,
wherein a silica content of the rubber compositions constituting the first layer and the second layer is greater than a carbon black content respectively, based on 100 parts by mass of the rubber component,
wherein the tread has a land part being partitioned by a circumferential groove in a plurality,
wherein a deepest part of the groove bottom of the circumferential groove is formed so as to be located on the inner side of an outer surface of the second layer in the tire radial direction, and
wherein, when the distance between an extension line of the land part and an extension line of the deepest part of the groove bottom of the circumferential groove is defined as H1 and the distance between an extension line of the outer surface of the second layer and the extension line of the deepest part of the groove bottom of the circumferential groove is defined as H2, H2/H1 is 0.20 or more.

2. The tire of claim 1, wherein the difference between a softener content of the rubber composition constituting the first layer based on 100 parts by mass of the rubber component and a softener content of the rubber composition constituting the second layer based on 100 parts by mass of the rubber component is 50 parts by mass or less.

3. The tire of claim 1 or 2, wherein the difference between a sulfur content of the rubber composition constituting the first layer based on 100 parts by mass of the rubber component and a sulfur content of the rubber composition constituting the second layer based on 100 parts by mass of the rubber component is 1.0 parts by mass or less.

4. The tire of any one of claims 1 to 3, wherein the difference between a vulcanization accelerator content of the rubber composition constituting the first layer based on 100 parts by mass of the rubber component and a vulcanization accelerator content of the rubber composition constituting the second layer based on 100 parts by mass of the rubber component is 3.5 parts by mass or less.

5. The tire of any one of claims 1 to 4, wherein H2/H1 is 0.30 or more.

6. The tire of any one of claims 1 to 5, wherein at least one of the rubber compositions constituting the first layer and the second layer comprises 100 parts by mass or more of silica based on 100 parts by mass of the rubber component.

7. The tire of any one of claims 1 to 6, wherein each of the rubber compositions constituting the first layer and the second layer comprise 50 to 130 parts by mass of silica based on 100 parts by mass of the rubber component, and a proportion of silica with respect to a total content of silica and carbon black is 60% by mass or more.

8. The tire of any one of claims 1 to 7, wherein each of the rubber compositions constituting the first layer and the second layer comprise 10 parts by mass or more of a softener based on 100 parts by mass of the rubber component.

9. The tire of any one of claims 1 to 8, wherein each of the rubber components constituting the first layer and the second layer comprise 40% by mass or more of a styrene-butadiene rubber.

10. The tire of any one of claims 1 to 9, wherein a content of a diene-based rubber modified with a functional group having affinity with silica in 100% by mass of the rubber component constituting the first layer and the second layer is 40% by mass or more.

11. The tire of any one of claims 1 to 10, wherein the rubber composition constituting the first layer comprises 1.0 parts by mass or more of aluminum hydroxide based on 100 parts by mass of the rubber component.

12. The tire of any one of claims 1 to 11, wherein the thickness of each of the first layer, the second layer, and the third layer is 1.0 mm or more.

13. The tire of any one of claims 1 to 12, wherein a ratio (t2/t1) of a thickness t2 of the second layer with respect to a thickness t1 of the first layer is 0.4 to 5.0.

14. The tire of any one of claims 1 to 13, wherein a ratio (t3/t2) of a thickness t3 of the third layer with respect to a thickness t2 of the second layer is 0.2 to 3.0.

15. The tire of any one of claims 1 to 14, wherein a tire inner cavity is provided with at least one selected from the group consisting of a sealant, a noise-damping body, and an electronic component for tire monitoring.

16. The tire of any one of claims 1 to 15, wherein the tire is a tire for a passenger car.

## Patentansprüche

1. Reifen mit einer Lauffläche,
wobei die Lauffläche mindestens eine erste Schicht umfasst, die eine Laufflächenoberfläche bildet, eine zweite Schicht, die auf der Innenseite der ersten Schicht in radialer Richtung benachbart angeordnet ist, und eine dritte Schicht, die auf der Innenseite der zweiten Schicht in der radialen Richtung vorhanden ist,
wobei die erste Schicht, die zweite Schicht und die dritte Schicht aus einer Kautschukzusammensetzung zusammengesetzt sind, die eine Kautschukkomponente umfasst,
wobei die Kautschukzusammensetzungen, die die erste Schicht und die zweite Schicht bilden, Siliciumdioxid und ein Silan-Kupplungsmittel auf Mercapto-Basis umfassen,
wobei der Siliciumdioxidsgehalt der Kautschukzusammensetzungen, die die erste Schicht und die zweite Schicht bilden, jeweils größer als der Rußgehalt ist, bezogen auf 100 Masseteile der Kautschuk-Komponente,
wobei die Lauffläche einen Landteil aufweist, der durch eine Umfangsrille in eine Vielzahl unterteilt ist,
wobei ein tiefster Teil des Rillenbodens der Umfangsrille so ausgebildet ist, dass er sich auf der Innenseite einer Außenfläche der zweiten Schicht in der radialen Richtung des Reifens befindet, und
wobei, wenn der Abstand zwischen einer Verlängerungslinie des Landteils und einer Verlängerungslinie des tiefsten Teils des Rillenbodens der Umfangsrille als H1 bezeichnecht ist und der Abstand zwischen einer Verlängerungslinie der äußeren Oberfläche der zweiten Schicht und der Verlängerungslinie des tiefsten Teils des Rillenbodens der Umfangsrille als H2 bezeichnet ist, H2/H1 0,20 oder mehr ist.

2. Reifen nach Anspruch 1, wobei die Differenz zwischen dem Weichmachergehalt der Kautschukzusammensetzung, die die erste Schicht bildet, bezogen auf 100 Masseteile der Kautschukkomponente, und dem Weichmachergehalt der Kautschukzusammensetzung, die die zweite Schicht bildet, bezogen auf 100 Masseteile der Kautschukkomponente, 50 Masseteile oder weniger ist.

3. Reifen nach Anspruch 1 oder 2, wobei die Differenz zwischen dem Schwefelgehalt der Kautschukzusammensetzung, die die erste Schicht bildet, bezogen auf 100 Masseteile der Kautschukkomponente, und dem Schwefelgehalt der Kautschukzusammensetzung, die die zweite Schicht bildet, bezogen auf 100 Masseteile der Kautschukkomponente, 1,0 Masseteile oder weniger ist.

4. Reifen nach einem der Ansprüche 1 bis 3, wobei die Differenz zwischen dem Vulkanisationsbeschleunigersgehalt in der Kautschukzusammensetzung, die die erste Schicht bildet, bezogen auf 100 Masseteile der Kautschukkomponente, und dem Vulkanisationsbeschleunigersgehalt in der Kautschukzusammensetzung, die die zweite Schicht bildet, bezogen auf 100 Masseteile der Kautschukkomponente, 3,5 Masseteile oder weniger ist.

5. Reifen nach einem der Ansprüche 1 bis 4, wobei H2/H1 0,30 oder mehr ist.

6. Reifen nach einem der Ansprüche 1 bis 5, wobei mindestens eine der Kautschukzusammensetzungen, die die erste Schicht und die zweite Schicht bilden, 100 Masseteile oder mehr Siliciumdioxid, bezogen auf 100 Masseteile der Kautschukkomponente, umfasst.

7. Reifen nach einem der Ansprüche 1 bis 6, wobei jede der Kautschukzusammensetzungen, die die erste Schicht und die zweite Schicht bilden, 50 bis 130 Masseteile Siliciumdioxid umfasst, bezogen auf 100 Masseteile der Kautschukkomponente, und der Anteil an Siliciumdioxid in Bezug auf den Gesamtgehalt an Siliciumdioxid und Ruß 60 Massenprozent oder mehr ist.

8. Reifen nach einem der Ansprüche 1 bis 7, wobei jede der Kautschukzusammensetzungen, die die erste Schicht und die zweite Schicht bilden, 10 Masseteile oder mehr eines Weichmachers, bezogen auf 100 Masseteile der Kautschukkomponente, umfasst.

9. Reifen nach einem der Ansprüche 1 bis 8, wobei jede der Kautschukkomponenten, die die erste Schicht und die zweite Schicht bilden, 40 Massenprozent oder mehr eines Styrol-Butadien-Kautschuks umfasst.

10. Reifen nach einem der Ansprüche 1 bis 9, wobei der Gehalt eines Kautschuks auf Dienbasis, der mit einer funktionellen Gruppe mit Affinität zu Siliciumdioxid modifiziert ist, in 100 Massenprozent der Kautschukkomponente, die die erste Schicht und die zweite Schicht bildet, 40 Massenprozent oder mehr ist.

11. Reifen nach einem der Ansprüche 1 bis 10, wobei die Kautschukzusammensetzung, die die erste Schicht bildet, 1,0 Masseteile oder mehr Aluminiumhydroxid, bezogen auf 100 Masseteile der Kautschukkomponente, umfasst.

12. Reifen nach einem der Ansprüche 1 bis 11, wobei die Dicke jeder der ersten Schicht, der zweiten Schicht und der dritten Schicht 1,0 mm oder mehr ist.

13. Reifen nach einem der Ansprüche 1 bis 12, wobei das Verhältnis (t2/t1) der Dicke t2 der zweiten Lage zur Dicke t1 der ersten Lage 0,4 bis 5,0 ist.

14. Reifen nach einem der Ansprüche 1 bis 13, wobei das Verhältnis (t3/t2) der Dicke t3 der dritten Schicht zur Dicke t2 der zweiten Schicht 0,2 bis 3,0 ist.

15. Reifen nach einem der Ansprüche 1 bis 14, wobei ein innerer Reifenhohlraum mit mindestens einer Komponente versehen ist, die aus der Gruppe ausgewählt ist, die aus einem Dichtmittel, einem geräuschdämpfenden Körper und einer elektronischen Komponente zur Reifenüberwachung besteht.

16. Reifen nach einem der Ansprüche 1 bis 15, wobei der Reifen ein Reifen für einen Personenkraftwagen ist.

## Revendications

1. Pneu ayant une bande de roulement,
dans lequel la bande de roulement comprend au moins une première couche constituant une surface de bande de roulement, une deuxième couche étant disposée de manière adjacente sur le côté intérieur de la première couche dans la direction radiale, et une troisième couche étant présente sur le côté intérieur de la deuxième couche dans la direction radiale,
dans lequel la première couche, la deuxième couche et la troisième couche sont composées d'une composition de caoutchouc comprenant un composant caoutchouc,
dans lequel les compositions de caoutchouc constituant la première couche et la deuxième couche comprennent de la silice et un agent de couplage silane à base de mercapto,
dans lequel la teneur en silice des compositions de caoutchouc constituant la première couche et la deuxième couche est supérieure à la teneur en noir de carbone, respectivement, sur la base de 100 parties en masse du composant caoutchouc,
dans lequel la bande de roulement a une partie terrestre divisée par une rainure circonférentielle en une pluralité,
dans lequel une partie la plus profonde du fond de rainure de la rainure circonférentielle est formée de manière à être située sur le côté intérieur d'une surface extérieure de la deuxième couche dans la direction radiale du pneu, et
dans lequel, lorsque la distance entre une ligne d'extension de la partie terrestre et une ligne d'extension de la partie la plus profonde du fond de rainure de la rainure circonférentielle est définie comme H1 et que la distance entre une ligne d'extension de la surface extérieure de la deuxième couche et la ligne d'extension de la partie la plus profonde du fond de rainure de la rainure circonférentielle est définie comme H2, H2/H1 est égal ou supérieur à 0,20.

2. Pneu selon la revendication 1, dans lequel la différence entre un teneur en plastifiant de la composition de caoutchouc constituant la première couche, sur la base de 100 parties en masse du composant caoutchouc, et un teneur en plastifiant de la composition de caoutchouc constituant la deuxième couche, sur la base de 100 parties en masse du composant caoutchouc, est de 50 parties en masse ou moins.

3. Pneu selon la revendication 1 ou 2, dans lequel la différence entre une teneur en soufre de la composition de caoutchouc constituant la première couche, sur la base de 100 parties en masse du composant caoutchouc, et une teneur en soufre de la composition de caoutchouc constituant la deuxième couche, sur la base de 100 parties en masse du composant caoutchouc, est de 1,0 partie en masse ou moins.

4. Pneu selon l'une quelconque des revendications 1 à 3, dans lequel la différence entre la teneur en accélérateur de vulcanisation de la composition de caoutchouc constituant la première couche, sur la base de 100 parties en masse du composant caoutchouc, et la teneur en accélérateur de vulcanisation de la composition de caoutchouc constituant la deuxième couche, sur la base de 100 parties en masse du composant caoutchouc, est de 3,5 parties en masse ou moins.

5. Pneu de l'une quelconque des revendications 1 à 4, dans lequel H2/H1 est de 0,30 ou plus.

6. Pneu de l'une quelconque des revendications 1 à 5, dans lequel au moins l'une des compositions de caoutchouc constituant la première couche et la deuxième couche comprend 100 parties en masse ou plus de silice sur la base de 100 parties en masse du composant caoutchouc.

7. Pneu selon l'une quelconque des revendications 1 à 6, dans lequel chacune des compositions de caoutchouc constituant la première couche et la deuxième couche comprend 50 à 130 parties en masse de silice sur la base de 100 parties en masse du composant caoutchouc, et une proportion de silice par rapport à une teneur totale en silice et en noir de carbone est de 60 % en masse ou plus.

8. Pneu selon l'une quelconque des revendications 1 à 7, dans lequel chacune des compositions de caoutchouc constituant la première couche et la deuxième couche comprend 10 parties en masse ou plus d'un plastifiant sur la base de 100 parties en masse du composant caoutchouc.

9. Pneu selon l'une quelconque des revendications 1 à 8, dans lequel chacun des composants caoutchouc constituant la première couche et la deuxième couche comprend 40 % en masse ou plus d'un caoutchouc styrène-butadiène.

10. Pneu selon l'une quelconque des revendications 1 à 9, dans lequel une teneur en caoutchouc à base diénique modifié par un groupe fonctionnel ayant une affinité avec la silice dans 100 % en masse du composant caoutchouc constituant la première couche et la deuxième couche est de 40 % en masse ou plus.

11. Pneu selon l'une quelconque des revendications 1 à 10, dans lequel la composition de caoutchouc constituant la première couche comprend 1,0 parties en masse ou plus d'hydroxyde d'aluminium sur la base de 100 parties en masse du composant caoutchouc.

12. Pneu selon l'une quelconque des revendications 1 à 11, dans lequel l'épaisseur de chacune des première, deuxième et troisième couches est de 1,0 mm ou plus.

13. Pneu selon l'une quelconque des revendications 1 à 12, dans lequel un rapport (t2/t1) d'un épaisseur t2 de la deuxième couche par rapport à un épaisseur t1 de la première couche est compris entre 0,4 et 5,0.

14. Pneu selon l'une quelconque des revendications 1 à 13, dans lequel un rapport (t3/t2) d'un épaisseur t3 de la troisième couche par rapport à un épaisseur t2 de la deuxième couche est compris entre 0,2 et 3,0.

15. Pneu selon l'une quelconque des revendications 1 à 14, dans lequel une cavité interne du pneu est pourvue d'au moins un élément choisi dans le groupe constitué par un mastic d'étanchéité, un corps d'amortissement du bruit et un composant électronique pour la surveillance du pneu.

16. Pneu selon l'une quelconque des revendications 1 à 15, dans lequel le pneu est un pneu pour une voiture particulière.
